# EUROPEAN PATENT APPLICATION

(11) **EP 2 716 703 A1**
(43) Date of publication of application: **09.04.2014**
(21) Application number: 12793346.3
(22) Date of filing: 31.05.2012
(51) Int. Cl.: C08L 21/00, C08F 8/34, C08K 3/04, C08K 3/36, C08L 47/00

(54) **DISPERSANT FOR INORGANIC FILLER MATERIAL AND METHOD FOR PRODUCING SAME**

(30) Priority: 01.06.2011 JP 2011123134; 01.05.2012 JP 2012104362
(71) Applicant: Takemoto Yushi Kabushiki Kaisha, Gamagori-shi, Aichi 443-8611 (JP)
(72) Inventor: OHI Yuji, Gamagori-shi Aichi 443-8611 (JP); HATTORI Makoto, Gamagori-shi Aichi 443-8611 (JP); NODA Ippei, Gamagori-shi Aichi 443-8611 (JP); MIYANO Akira, Gamagori-shi Aichi 443-8611 (JP); MATSUMOTO Hironari, Gamagori-shi Aichi 443-8611 (JP)
(74) Representative: EIP
(86) International application number: PCT/JP2012/064071
(87) International publication number: WO 2012/165543

(57) **Abstract**

The invention provides dispersing agents for inorganic fillers capable of uniformly dispersing inorganic fillers in a substrate such as made of a rubber or resin material such that molded products with improved mechanical strength and abrasion resistance can be produced from such a substrate material and more specifically that rubber compositions with improved abrasion resistance and workability can be obtained and that automobile tires with improved low fuel consumption and handling stability can be produced from such rubber compositions, as well as a method of producing such dispersing agents characterized as using a modified conjugated diene polymer obtained by introducing specified structural units with improved mutual reaction with inorganic fillers into a conjugated diene polymer having affinity with rubber and resin materials.

## Description

### Field of the Invention

This invention relates to dispersing agents for inorganic fillers and methods of producing the same. More specifically, this invention relates to dispersing agents for dispersing an inorganic filler material such as silica, carbon black, calcium carbonate and magnesium carbonate into a substrate material not having affinity therewith such as rubbers and resins and obtaining molded articles having superior mechanical strength and abrasion resistance from such a substrate, as well as methods of producing such dispersing agents. Even more specifically, this invention relates to dispersing agents for preparing rubber compositions which are superior in low pyrogenicity, abrasion resistance and workability and producing from such rubber compositions tires which are superior in low fuel consumption and handling stability, as well as methods of producing such dispersing agents.

### Background of the Invention

Polymers obtained by polymerizing conjugated diene compounds and aromatic vinyl compounds in an inactive organic solvent in the presence of an organic alkaline metal catalyst are widely being used as synthetic rubber and synthetic resin. It has also been known to use inorganic fillers such as silica and carbon black in order to improve the mechanical strength and abrasion resistance of such synthetic rubbers and synthetic resins, as disclosed in Japanese Patent Publications (Tokkai) 06-248116, 07-070369, 08-245838, and 03-252431. It is difficult, however, to uniformly disperse inorganic fillers such as silica and carbon black in a substrate such as synthetic rubber or synthetic resin. For this reason, various attempts have been made to uniformly disperse inorganic fillers in a substrate material for the aforementioned kind. Examples of such attempts include: (1) the method of modifying the end of conjugated diene polymer with halogenated alkoxysilane derivatives (See, for example, Japanese Patent Publication (Tokkai) 62-227908); (2) the method of modifying a conjugated diene polymer by causing it to react with an aminosilane compound (See, for example, Japanese Patent Publication (Tokkai) 63-186748); (3) the method of modifying the end of a conjugated diene polymer with γ-glycidoxypropyl trimethoxysilane or the like (See, for example, Japanese Patent Publication (Tokkai) 09-087426); (4) the method of introducing alkoxysilane structure into a conjugated diene polymer (See, for example, Japanese Patent Publication (Tokkai) 2010-202769); and (5) the method of using a silane coupling agent with increased reactivity (See, for example, Japanese Patent Publication (Tokkai) 06-248116). By such prior art methods, however, inorganic fillers such as silica and carbon black cannot be sufficiently uniformly dispersed inside a substrate and, as a result, there remains the problem that the mechanical strength and the abrasion resistance of the molded articles obtained from such a substrate also remain insufficient. More specifically, such substrates cannot produce rubber products with sufficiently low pyrogenicity and superior abrasion resistance and workability. Thus, it is still a problem that molded products such as automobile tires having superior low fuel and handling stability properties cannot be produced from such rubber compositions.

### Summary of the Invention

It is therefore an object of the present invention to provide a dispersing agent for inorganic fillers capable of uniformly dispersing inorganic fillers such as silica and carbon black in a substrate made of a rubber or resin material such that molded products superior in mechanical strength and abrasion resistance can be obtained from such a substrate, and more specifically, of preparing rubber compositions superior in low pyrogenicity, abrasion resistance and workability such that tires which are superior in low fuel consumption and handling stability can be produced, as well as methods of producing such a dispersing agent.

The present invention was accomplished by the inventors hereof and is based on their discovery as a result of their diligent work in view of the problems of the prior art attempts described above that dispersing agents for inorganic fillers having a specified structure with an improved interaction with the inorganic fillers introduced into a conjugated diene polymer are appropriate.

The present invention relates to a dispersing agent for inorganic fillers for dispersing the inorganic fillers uniformly inside a substrate, characterized as comprising a modified conjugated diene polymer having one or more of Structural Unit A, Structural Unit B and Structural Unit C introduced into a conjugated diene polymer, wherein Structural Unit A is shown by Formula 1 which is 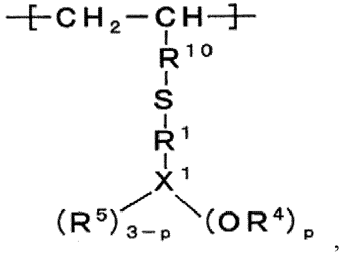 Structural Unit B is shown by Formula 2 which is 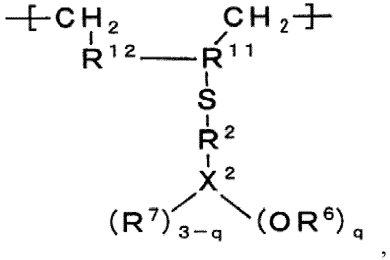 Structural Unit C is shown by Formula 3 which is 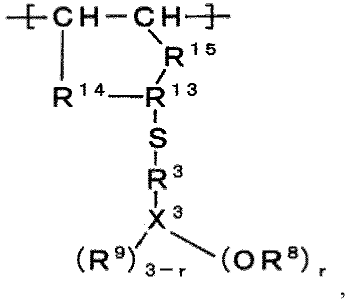 wherein R¹ - R¹⁰, R¹⁴ and R¹⁵ are each a hydrocarbon group with 1 - 20 carbon atoms, R¹¹ - R¹³ are each a hydrocarbon group with 1-10 carbon atoms, X¹ - X³ are each Si, Sn or Ge, and p, q and r are each an integer 1 - 3.

This invention also relates to a method of producing such a dispersing agent for inorganic fillers according to this invention described above.

### Detailed Description of the Invention

The dispersing agent for inorganic fillers according to this invention (hereinafter referred to as the dispersing agent of this invention) will be described first. The dispersing agent of this invention is characterized as a dispersing agent for inorganic fillers for dispersing the inorganic fillers uniformly inside a substrate, comprising a modified conjugated diene polymer having one or more selected from Structural Unit A, Structural Unit B and Structural Unit C respectively shown by Formula 1 which is 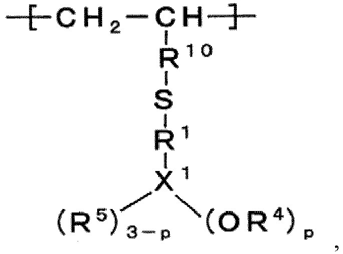 Formula 2 which is 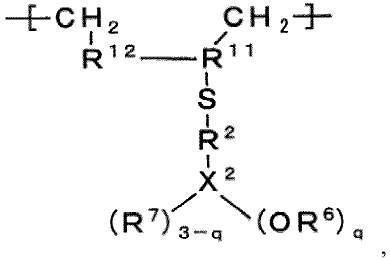 and Formula 3 which is 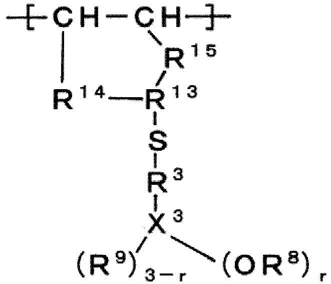 introduced into a conjugated diene polymer but those comprising a modified conjugated diene polymer having Structural Unit A shown by Formula 1 and Structural Unit B shown by Formula 2 and those also including Structural Unit C shown by Formula 3 and having all of these Structural Units introduced to make a modified conjugated diene polymer are preferable.

In Structural Unit A shown by Formula 1, Structural Unit B shown by Formula 2 and Structural Unit C shown by Formula 3, R¹ - R³ are each a hydrocarbon group with 1 - 20 carbon atoms but hydrocarbon groups with 1 - 11 carbon atoms are preferable and examples of such hydrocarbon groups include (1) alkylene groups such as methylene, ethylene, propylene, butylene, pentylene, hexylene, heptylene, octatylene, nonylene, decylene, and undecylene; (2) alkenyl groups such as ethene, propene, butene, pentene, hexene, heptene, and octene; (3) alkynyl groups such as ethyne, propyne, butyne, pentyne, hexyne, heptyne, and octyne; and (4) hydrocarbon groups obtained by removing two hydrogen atoms from an aromatic hydrocarbon compound such as benzene, methyl benzene, ethyl benzene and styrene.

Regarding Structural Unit A shown by Formula 1, Structural Unit B shown by Formula 2 and Structural Unit C shown by Formula 3, R⁴ - R⁹ are each a hydrocarbon group with 1 - 20 carbon atoms. Among these, hydrocarbon groups with 1 - 4 carbon atoms are preferable such as (1) methyl group, ethyl group, propyl group and butyl group, (2) ethenyl group, propenyl group and butenyl group, and (3) ethynyl group, propynyl group, and butynyl group.

Regarding Structural Unit A shown by Formula 1, R¹⁰ is a hydrocarbon group with 1 - 20 carbon atoms. Among these, hydrocarbon groups with 1 - 4 carbon atoms are preferable.

Regarding Structural Unit B shown by Formula 2 and Structural Unit C shown by Formula 3, R¹¹ - R¹³ are each a hydrocarbon group with 1 - 10 carbon atoms.

Regarding Structural Unit C shown by Formula 3, R¹⁴ and R¹⁵ are each a hydrocarbon group with 1 - 20 carbon atoms.

Regarding Structural Unit A shown by Formula 1, Structural Unit B shown by Formula 2 and Structural Unit C shown by Formula 3, X¹ - X³ are each Si, Sn or Ge. Although it depends on the inorganic fillers to be used, X¹ - X³ are each preferably Si if the inorganic fillers are silica.

Examples of conjugated diene polymers to be used for the dispersing agents of this invention include those obtained by polymerizing or copolymerizing one or more monomers selected from the group consisting of 1,3-butadiene, isoprene, 1,3-pentadiene, 1,4-pentadiene, cyclopentadiene, 2,3-dimethyl-1,3-butadiene, 1,4-hexadiene, 1,5-hexadiene, 1,3-cyclohexadiene, 1,4-cyclohexadiene, 1,3-heptadiene, 1,6-heptadiene, 2-methyl-1,3-heptadiene, 3-methyl-1,4-heptadiene, 1,3,5-heptatriene, 5-methyl-1,3,6-heptatriene, cycloheptatriene, 1,7-octadiene, 1,3-octadiene, 3,7-dimethyl-1,6-octadiene, 7,7-dimethyl-2,5-octadiene, 1,2-cyclooctadiene, 1,5-cyclooctadiene, and 1,3,5-cyclooctatriene but those obtained by copolmerizing styrene or acrylonitrile as monomers other than the above may also be included.

In particular, those obtained by polymerizing or copolymerizing one or more monomers selected from the group consisting of 1,3-butadiene, isoprene, and 2,3-dimethyl-1,3-butadiene are preferable as the conjugated diene polymers for the dispersing agents of this invention and those having within their molecule 80 molar % or more of structural units with 1,2 chemical bonds are even more preferable.

Although there is no particular limitation on the numerical molecular weight of the conjugated diene polymers to be used for the dispersing agents of this invention, those with numerical molecular weight in the range of 200 - 100000 are preferable and those with numerical molecular weight in the range of 500 - 10000 are even more preferable. In the above and hereinafter, the numerical molecular weight is a polystyrene-converted numerical average molecular weight according to the GPC (gel permeation chromatography) method.

Although neither is there any particular limitation on the numerical molecular weight of the modified conjugated diene polymers to be used as the dispersing agents of this invention, those with numerical average molecular weight in the range of 300 - 200000 are preferable and those with numerical average molecular weight in the range of 700 - 20000 are even more preferable.

The dispersing agents of this invention can be applied to various types of substrate material such as rubbers and resins. It is particularly preferable to be applied to rubber materials and examples of such rubber materials include natural rubber, synthetic isoprene rubber, butadiene rubber, styrene-butadiene rubber, ethylene-α-olefin-diene copolymer rubber, acrylonitrile-butadiene rubber, acrylonitrile-styrene-butadiene rubber, chloroprene rubber, halogenated butyl rubber, and copolymers of styrene compound having halogenated methyl group and isoprene.

The dispersing agents of this invention can be applied to many types of inorganic fillers. It is particularly preferable to apply to one or more kinds selected from silica, carbon black, calcium carbonate, magnesium carbonate and alumina and even more preferable to apply to those of a type selected from silica and carbon black.

When a dispersing agent of this invention is applied to a rubber material, it is usually at a rate of 1 - 40 mass parts per 100 mass parts of the rubber material but it is preferable to apply at a rate of 3 - 30 mass parts. For mixing them together, a commonly used mixer such as an open-type mixer such as a roll or a sealed-type mixer such as a Banbury mixer may be used.

Next, a method of producing a dispersing agent of this invention (hereinafter referred to as the production method of this invention) is explained. The production method of this invention is a method of introducing one or more of structural units selected from the group consisting of Structural Unit A shown by Formula 1, Structural Unit B shown by Formula 2 and Structural Unit C shown by Formula 3 into a conjugated diene polymer.

According to the production method of this invention, a compound having a mercapto group in its molecule as shown by Formula 4 which is 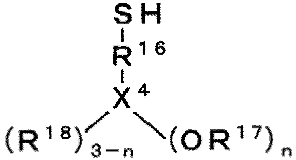 is used for causing a reaction with a conjugated diene polymer and introducing structural units as explained above into this conjugated diene polymer. In Formula 4, R¹⁶ - R¹⁸ are each a hydrocarbon group with 1 - 20 carbon atoms, X⁴ is Si, Sn or Ge and n is an integer 1-3.

In Formula 4, R¹⁶ - R¹⁸ are the same as explained above for R¹ - R⁹ in Formulas 1 - 3 and X⁴ is the same as explained above for X¹ - X³. However, hydrocarbon groups with 1 - 11 carbon atoms are particularly preferable as R¹⁶ and hydrocarbon groups with 1 - 4 carbon atoms are particularly preferable as R¹⁷ and R¹⁸.

Examples of a compound having a mercapto group in its molecule as shown by Formula 4 include silane compounds having a mercapto group in the molecule (compounds as shown by Formula 4 where X⁴ is Si), tin compounds having a mercapto group in the molecule (compounds as shown by Formula 4 where X⁴ is Sn) and germanium compounds having a mercapto group in the molecule (compounds as shown by Formula 4 where X⁴ is Ge). For the purpose of using in the production method of this invention, however, silane compounds having a mercapto group in the molecule and tin compounds having a mercapto group in the molecule are preferable and silane compounds having a mercapto group in the molecule are even more preferable.

Examples of silane compounds having a mercapto group in the molecule include 3-mercaptopropyl trimethoxysilane, 3-mercaptopropyl triethoxysilane, 2-mercaptoethyl trimethoxysilane, 2-mercaptoethyl triethoxysilane, 3-mercaptopropyl dimethoxy methylsilane, 3-mercaptopropyl diethoxy methylsilane, 3-mercaptodimethoxy ethylsilane, 3-mercaptodiethoxy ethylsilane, 3-3-mercaptopropyl methoxy dimethylsilane, 3-mercaptopropyl ethoxydimethylsilane, mercaptomethylene methyldiethoxysilane, mercaptomethylene triethoxysilane, 2-mercaptoethyl methoxydimethylsilane, 2-mercaptoethyl ethoxydimethylsilane, 11-mercaptoundecyl trimethoxysilane, 11-mercaptoundecyl dimethoxymethylsilane, 11-mercaptoundecyl methoxydimethylsilane, 11-mercaptoundecyl triethoxysilane and 11-mercaptoundecyl diethoxymethylsilane. These silane compounds may be used either singly or as a combination or two or more.

In the production method of this invention, there is no particular limitation as to the reaction ratio between the conjugated diene polymer and the compound having a mercapto group in the molecule as shown by Formula 4 but it is preferable to cause a reaction at a weight ratio ((conjugated diene polymer)/(compound shown by Formula 4)) of 99/1 - 10/90. From the point of view of the reaction time, however, it is even more preferable that the weight ratio be 95/5 - 15/85.

Modified conjugated diene polymers as a dispersing agent of this invention can be obtained by causing a compound shown by Formula 4 as explained above to a conjugated diene polymer with heat in an atmosphere of an inactive gas in the absence of catalysts. More specifically, for example, it can be obtained by heating a conjugated diene polymer polymerized or copolymerized with one or more monomers selected from 1,3-butadiene, isoprene and 2,3-dimethyl-1,3-butadiene to 120 - 250°C and dropping a compound having a mercapto group in its molecule as shown by Formula 4 to cause a reaction. The reaction temperature is preferably 140 - 200°C. If the reaction temperature exceeds 200°C, the dispersing agent thus obtained tends to be colored. If the reaction temperature is below 140°C, the reaction speed becomes adversely affected. If the ratio of the compound shown by Formula 4 is increased with respect to the conjugated diene polymer in the reaction, it is preferable to carry out the reaction under a pressured condition from the point of view of reaction time and reaction rate to use an autoclave.

According to the production method of this invention, as explained above, a modified conjugated diene polymer is obtained as a dispersing agent of this invention by causing a reaction between a conjugated diene polymer and a compound shown by Formula 4. There is no particular limitation on the reaction rate for the reaction but it is preferable to make it 85% or more and even more preferable to make it 90% or more.

The dispersing agents of this invention may be used together with various agents which are normally used by the Japan Rubber Manufactures Association within a limit of not adversely affecting the effects of the dispersing agents. Examples of such agents which may be used together include curing agents other than sulfur, curing accelerators, processing oil, plasticizers, antioxidants, anti-scorch agents, flowers of zinc, stearic acid, thermosetting resins and thermoplastic resins.

A mixture that uses a dispersing agent of this agent to have inorganic fillers dispersed in a rubber material can be made into a molded rubber product by a known method. Examples of the molding method include the injection molding method if the rubber material is a thermoplastic resin such as ABS resin and the compression molding method using a sheet molding compound (SMC), the injection molding method using a bulk molding compound (BMC), the resin transfer molding method (RTM) using a liquid molding material, the resin injection molding method, the reaction injection molding method (RIM) and the pultrusion molding method. If a curing process is carried out after the molding process, use may be made as various kinds of rubber products such as tires, vibration-proof rubber, belts, hoses and other industrial products.

When rubber materials, inorganic fillers and a dispersing agent of this invention are mixed together and this mixture is used to produce tires such as automobile tires, it is preferable to further mix in a coupling agent. Many kinds of known coupling agents may be used for this purpose but silane coupling agents are preferable. When such a mixture is prepared, normally 5 - 200 mass parts and preferably 10 - 100 mass parts of inorganic fillers are mixed with 100 mass parts of a rubber material, and normally 1 - 40 mass parts and preferably 3 - 20 mass parts of a dispersing agent of this invention are added. If a silane coupling agent is used, normally 0.5 - 50 mass parts and preferably 2 - 25 mass parts of it are mixed in. They can be mixed together by using an open-type mixer such as a roll or a sealed-type mixer such as a Banbury mixer.

By using a dispersing agent of this invention, inorganic fillers such as silica and carbon black can be uniformly dispersed in a substrate of many kinds such as rubber and resin materials and molded products with superior mechanical strength such as tensile strength and fracture strength as well as abrasion resistance can be obtained from such a mixture. More specifically, a rubber composition with inorganic fillers dispersed uniformly in a rubber material can be obtained if a dispersing agent of this invention is used and such a rubber composition is superior in low pyrogenicity, abrasion resistance and workability such that tires superior in low fuel consumption and handling stability can be obtained from such a rubber composition.

The invention is described next further in detail by way of test and comparison examples but it goes without saying that the invention is not intended to be limited to these test examples. In the description of these test and comparison examples, "parts" will mean "mass parts" and "%" will mean "mass %" unless otherwise specifically explained.

### Part 1: Synthesis of modified conjugated diene polymers as dispersion agents for inorganic fillers

### Test Example 1 (Synthesis of P-1)

Liquid 1,2-polybutadiene (NISSO-PB B-1000 (tradename) produced by Nippon Soda Co., Ltd.) (numerical average molecular weight = 1000) 900g as conjugated diene polymer was placed inside a 1.5L flask with 4-openings provided with a stirrer, a cooling tube, a tube for introducing nitrogen, a thermometer and a drip funnel and after its interior was well replaced with nitrogen, the temperature inside was raised to 150°C with stirring and 3-mercaptopropyl triethoxysilane (A-1891 (tradename) produced by Momentive Performance Materials Inc.) (molecular weight = 238.4) 100g was gradually dripped as compound shown by Formula 4. After the dripping ended, the content was further aged at 150°C for 5 hours. After this aging process, it was cooled to the room temperature and a colorless, transparent, viscous liquid modified conjugated diene polymer was obtained. The reaction rate of the modified conjugated diene polymer was over 98% since the peak of the silane coupling agent which was its starting substance has disappeared from the GPC chart, and its numerical average molecular weight was 1600. The modified conjugated diene polymer thus obtained will be referred to as dispersing agent for inorganic fillers P-1.

### Test Example 11 (Synthesis of P-11)

Liquid 1,2-polybutadiene (NISSO-PB-B-3000 (tradename) produced by Nippon Soda Co., Ltd.) (numerical average molecular weight = 3000) 334g as conjugated diene polymer and 3-mercaptopropyl triethoxysilane (A-1891 (tradename) produced by Momentive Performance Materials Inc.) (molecular weight = 238.4) 666g as compound shown by Formula 4 were placed inside a 2L autoclave provided with a pressure-resistant vessel, a stirrer, a pressure meter and a safety valve and after its interior was sufficiently replaced with nitrogen, a pressure of 2kg/cm² was applied with nitrogen. The interior temperature was thereafter raised to 150°C with stirring and a reaction was finally continued for 18 hours under the condition with a pressure of 4kg/cm² being applied. After the reaction, the temperature was reduced to the room temperature and a colorless, transparent, viscous liquid modified conjugated diene polymer was obtained. From a GPC chart, it was determined that the reaction rate of this modified conjugated diene polymer exceeded 98% and that its numerical average molecular weight was 9500. The modified conjugated diene polymer thus obtained will be referred to as dispersing agent for inorganic fillers P-11.

### Test Examples 2 - 10 and 12 - 34 (Synthesis of P-2 - P-10 and P-12 - P-34)

Dispersing agents for inorganic fillers P-2, P-7, P-8 and P-15 of Test Examples 2, 7, 8 and 15 were obtained similarly to the production of dispersing agent for inorganic fillers P-1 of Test Example 1 and the dispersing agents for inorganic fillers of the other Test Examples were obtained similarly to the production of dispersing agent for inorganic fillers P-11 of Test Example 11. Their details are shown together in Table 1.

**Table 1**

| TE | *1 | (a) Diene polymer | | | (b) compound shown by Formula 4 | | a/b (mass ratio) | *2 | RT (°C) | RR (%) | NAMW |
|---|---|---|---|---|---|---|---|---|---|---|---|
| | | Kind | MW | Amt | Kind | Amt | | | | | |
| 1 | P-1 | A-1 | 1000 | 90 | B-1 | 10 | 90/10 | 0.5 | 150 | >98 | 1600 |
| 2 | P-2 | A-1 | 1000 | 98 | B-1 | 2 | 98/2 | 0.1 | 150 | >98 | 1250 |
| 3 | P-3 | A-1 | 1000 | 50 | B-1 | 50 | 50/50 | 4.2 | 150 | >98 | 2100 |
| 4 | P-4 | A-1 | 1000 | 22 | B-3 | 78 | 22/78 | 18.1 | 150 | >98 | 4800 |
| 5 | P-5 | A-2 | 2000 | 50 | B-3 | 50 | 50/50 | 10.2 | 150 | >98 | 4300 |
| 6 | P-6 | A-2 | 2000 | 30 | B-4 | 70 | 30/70 | 25.9 | 150 | >98 | 7200 |
| 7 | P-7 | A-3 | 3000 | 92.6 | B-1 | 7.4 | 92.6/7.4 | 1 | 150 | >98 | 3800 |
| 8 | P-8 | A-3 | 3000 | 90 | B-2 | 10 | 90/10 | 1.6 | 150 | >98 | 3900 |
| 9 | P-9 | A-3 | 3000 | 71.6 | B-1 | 28.4 | 71.6/28.4 | 5 | 150 | >98 | 4400 |
| 10 | P-10 | A-3 | 3000 | 50 | B-1 | 50 | 50/50 | 12.6 | 150 | >98 | 6500 |
| 11 | P-11 | A-3 | 3000 | 33.4 | B-1 | 66.6 | 33.4/66.6 | 25.1 | 150 | >98 | 9500 |
| 12 | P-12 | A-3 | 3000 | 24 | B-1 | 76 | 24/76 | 39.9 | 150 | >98 | 15000 |
| 13 | P-13 | A-3 | 3000 | 19 | B-1 | 81 | 19/81 | 53.7 | 150 | >98 | 19500 |
| 14 | P-14 | A-3 | 3000 | 20 | B-5 | 80 | 20/80 | 34.2 | 150 | >98 | 18800 |
| 15 | P-15 | A-4 | 1000 | 70 | B-6 | 30 | 70/30 | 1.2 | 140 | >98 | 1600 |
| 16 | P-16 | A-4 | 1000 | 50 | B-6 | 50 | 50/50 | 5.6 | 150 | >98 | 2300 |
| 17 | P-17 | A-5 | 2000 | 50 | B-3 | 50 | 50/50 | 10.2 | 150 | >98 | 4400 |
| 18 | P-18 | A-6 | 3000 | 30 | B-1 | 70 | 30/70 | 29.4 | 150 | >98 | 12000 |
| 19 | P-19 | A-7 | 1000 | 70 | B-2 | 30 | 70/30 | 2.1 | 150 | >98 | 1850 |
| 20 | P-20 | A-8 | 5200 | 50 | B-3 | 50 | 50/50 | 26.5 | 150 | >98 | 13500 |
| 21 | P-21 | A-9 | 8000 | 80 | B-3 | 20 | 80/20 | 9.6 | 180 | >95 | 13000 |
| 22 | P-22 | A-9 | 8000 | 20 | B-1 | 80 | 20/80 | 134.2 | 160 | >96 | 45500 |
| 23 | P-23 | A-10 | 26000 | 50 | B-3 | 50 | 50/50 | 132.4 | 160 | >96 | 56000 |
| 24 | P-24 | A-11 | 44000 | 50 | B-5 | 50 | 50/50 | 12.5 | 180 | >95 | 110000 |
| 25 | P-25 | A-12 | 8000 | 40 | B-6 | 60 | 40/60 | 66.6 | 170 | >96 | 26000 |
| 26 | P-26 | A-13 | 28000 | 50 | B-5 | 50 | 50/50 | 79.9 | 200 | >95 | 59000 |
| 27 | P-27 | A-13 | 28000 | 50 | B-3 | 50 | 50/50 | 142.6 | 180 | >93 | 61000 |
| 28 | P-28 | A-14 | 54000 | 90 | B-1 | 10 | 90/10 | 25.2 | 180 | >95 | 71000 |
| 29 | P-29 | A-14 | 54000 | 40 | B-3 | 60 | 40/60 | 412.5 | 200 | >92 | 165000 |
| 30 | P-30 | A-15 | 2500 | 60 | B-6 | 40 | 60/40 | 9.3 | 150 | >96 | 4600 |
| 31 | P-31 | A-16 | 8500 | 30 | B-1 | 70 | 30/70 | 83.2 | 150 | >95 | 32000 |
| 32 | P-32 | A-13 | 28000 | 30 | B-1 | 70 | 30/70 | 274 | 180 | >92 | 112000 |
| 33 | P-33 | A-11 | 44000 | 25 | B-1 | 75 | 25/75 | 553.6 | 200 | >92 | 192000 |
| 34 | P-34 | A-14 | 54000 | 60 | B-2 | 40 | 60/40 | 172.7 | 200 | >92 | 123000 |

| | | | | | | | | | | | |
|---|---|---|---|---|---|---|---|---|---|---|---|
| In Table 1: TE: Test Example *1: Kind of dispersing agent for inorganic fillers MW: Molecular weight Amt: Amount that was used (in parts) *2: Added molar number of compound shown by Formula 4 per one mole of conjugated diene polymer RT: Reaction temperature RR: Rate of reaction NAMW: Numerical average molecular weight A-1: Liquid 1,2-polybutadiene (PB B-1000 (tradename) produced by Nippon Soda Co., Ltd.) with numerical average molecular weight = 1000 and structural units with 1,2 chemical bonds over 85% A-2: Liquid 1,2-polybutadiene (PB B-2000 (tradename) produced by Nippon Soda Co., Ltd.) with numerical average molecular weight = 2000 and structural units with 1,2 chemical bonds over 90% A-3: Liquid 1,2-polybutadiene (PB B-3000 (tradename) produced by Nippon Soda Co., Ltd.) with numerical average molecular weight = 3000 and structural units with 1,2 chemical bonds over 90% A-4: Liquid 1,2-polybutadiene with glycol at both ends (PB-G-1000 (tradename) produced by Nippon Soda Co., Ltd.) with numerical average molecular weight = 1000 and structural units with 1,2 chemical bonds over 85% A-5: Liquid 1,2-polybutadiene with glycol at both ends (PB-G-2000 (tradename) produced by Nippon Soda Co., Ltd.) with numerical average molecular weight = 2000 and structural units with 1,2 chemical bonds over 85% A-6: Liquid 1,2-polybutadiene with glycol at both ends (PB-G-3000 (tradename) produced by Nippon Soda Co., Ltd.) with numerical average molecular weight = 3000 and structural units with 1,2 chemical bonds over 90% A-7: Liquid 1,2-polybutadiene with carboxylic acid at both ends (PB-C-1000 (tradename) produced by Nippon Soda Co., Ltd.) with numerical average molecular weight = 1000 and structural units with 1,2 chemical bonds over 85% A-8: Liquid 1,2-polybutadiene (Ricon 154 (tradename) produced by Sartomar Company) with numerical average molecular weight = 5200 and structural units with 1,2 chemical bonds over 90% A-9: Liquid 1,4-polybutadiene (LBR-307 (tradename) produced by KURARAY CO., LTD.) with numerical average molecular weight = 8000 and structural units with 1,4 chemical bonds = 90% A-10: Liquid 1,4-polybutadiene (LBR-305 (tradename) produced by KURARAY CO., LTD.) with numerical average molecular weight = 26000 and structural units with 1,4 chemical bonds = 90% A-11: Liquid 1,4-polybutadiene (LBR-300 (tradename) produced by KURARAY CO., LTD.) with numerical average molecular weight = 44000 and structural units with 1,4 chemical bonds = 90% A-12: Liquid 1,2-polybutadiene (Ricon 134 (tradename) produced by Sartomar Company) with numerical average molecular weight = 8000 and structural units with 1,2 chemical bonds =28% A-13: Liquid polyisoprene (LIR-30 (tradename) produced by KURARAY CO., LTD.) with numerical average molecular weight = 28000 A-14: Liquid polyisoprene (LIR-50 (tradename) produced by KURARAY CO., LTD.) with numerical average molecular weight = 54000 A-15: Liquid polyisoprene with glycol at both ends (poly.ip (tradename) produced by Idemitsu Kosan Co., Ltd.) with numerical average molecular weight = 2500 A-16: Liquid styrene-butadiene copolymer (L-SBR-820 (tradename) produced by KURARAY CO., LTD.) with numerical average molecular weight = 8500 B-1: 3-mercaptopropyl triethoxysilane (A-1891 (tradename) produced by Momentive Performance Materials Inc.) with molecular weight = 238.42 B-2: 3-mercaptopropyl methyldiethoxysilane (produced by Tokyo Chemical Industry Co., Ltd.) with molecular weight = 208.42 B-3: 3-mercaptopropyl trimethoxysilane (KBM-803 (tradename) produced by Shin-Etsu Chemical Co., Ltd.) with molecular weight = 196.34 B-4: 3-mercaptopropyl methyldimethoxysilane (KBM-803 (tradename) produced by Shin-Etsu Chemical Co., Ltd.) with molecular weight = 180.34 B-5: 11-mercaptoundecyl trimethoxysilane (SIM6480.0 (tradename) produced by Gelest, Inc.) with molecular weight = 350.63 B-6: Mercaptomethylene methyldiethoxysilane (SIM6473.0 (tradename) produced by Gelest, Inc.) with molecular weight = 180.28 | | | | | | | | | | | |

### Part 2: Mixing with ABS resin, molding and evaluation

ABC resin (TFX-610 (tradename) produced by Techno Polymer Co., Ltd.), silica (Nipsil AQ (tradename) produced by TOSOH SILICA CORPORATION) as inorganic fillers and each of the dispersing agents for inorganic fillers obtained in the Test Examples in Part 1 were mixed together at the rates described in Table 1 by using a biaxial extruder to obtain pellets of ABS resin compositions. These ABS resin compositions were used for injection molding and molded products in the form of a plate were obtained. The dispersed conditions of the silica in the molded products were observed and evaluated by using a scanning electron microscope (SEM) with an energy dispersive X-ray spectrometer (EDX). Their bend elastic constants were also measured according to JIS-K7203-1983 and their izod impact strength was measured according to JIS-K7110. The results of these measurements are shown together in Table 2. Example 7 in Table 2 is an example where no dispersing agent for inorganic fillers was used.

The dispersed conditions of the silica in the molded products were evaluated as follows by cutting each sample by means of a microtome, and observing the dispersed condition of the section plane by means of a scanning electron microscope with an energy dispersive X-ray spectrometer:
A: Dispersed condition is approximately the same as that for the primary particles
B: A few agglomerated particles are observed
C: Approximately only agglomerated particles are observed and no primary particles are observed

The median diameter by the laser-scattering diffraction particle-size distribution meter was used as the particle size of the primary particles.

**Table 2**

| Example | ABS resin composition | | | | Molded product of ABS resin composition | | |
|---|---|---|---|---|---|---|---|
| | Dispersing agent for inorganic fillers | | ABS resin | Silica | Dispersed condition of silica | Bend elastic constant | Izod impact strength (kgf-cm/cm) |
| | Kind | Amount (part) | Amount (part) | Amount (part) | | | |
| 1 | P-1 | 5 | 100 | 30 | A | 46000 | 7.8 |
| 2 | P-8 | 5 | 100 | 30 | A | 51000 | 7.7 |
| 3 | P-21 | 5 | 100 | 30 | A | 62000 | 8.1 |
| 4 | P-15 | 5 | 100 | 30 | A | 71000 | 8.6 |
| 5 | P-26 | 5 | 100 | 30 | A | 68000 | 9.8 |
| 6 | P-28 | 5 | 100 | 30 | A | 58000 | 8.2 |
| 7 | - | - | 100 | 30 | C | 31000 | 2.6 |

As can be understood clearly from the results shown in Table 2, silica can be uniformly dispersed inside ABS resin in each of the examples using a dispersing agent of this invention such that the bend elastic constant and the izod impact strength of the corresponding molded product are significantly improved.

### Part 3 Mixing with rubber materials, molding and evaluation

Natural rubber (Type RSS3), butadiene rubber (BR01 (tradename) produced by JSR Corporation), silica (Nipsil AQ (tradename) produced by TOSOH SILICA CORPORATION) as inorganic fillers, the mixture with mixing ratio as described in Table 4, and each of the dispersing agents for inorganic fillers obtained in the Test Examples in Part 1 were mixed together at the rate described in Table 3 and kneaded together by means of a Banbury mixer of a sealed type to obtain a rubber composition. Dispersed conditions of silica in molded products in the form of a plate molded from these rubber compositions were evaluated as done in Part 2. Their tensile strengths at break and elongations at break were also measured according to JIS-K6301 and their abrasion resistance indexes were obtained by measuring the abrasion at slip ratio 60% at room temperature by using a lambourn abrasion tester and comparing with the abrasion resistance of the molded product of the rubber composition of Example 14 set equal to 100. The larger this index, the better is the abrasion resistance. The results of these evaluations are shown together in Table 3, in which Example 14 is a blank without using any dispersing agent for inorganic fillers.

**Table 3**

| Example | Rubber material | | | | | | Molded product of rubber material | | | |
|---|---|---|---|---|---|---|---|---|---|---|
| | Dispersing agent for inorganic fillers | | Natural rubber | Butadiene rubber | Silica | Mixture of Table 4 | *3 | TSAB | EAB | ARI |
| | Kind | Amt | Amt | Amt | Amt | Amt | | | | |
| 8 | P-1 | 5 | 60 | 40 | 50 | 16.3 | A | 222 | 456 | 121 |
| 9 | P-8 | 5 | 60 | 40 | 50 | 16.3 | A | 226 | 428 | 131 |
| 10 | P-21 | 5 | 60 | 40 | 50 | 16.3 | A | 238 | 445 | 118 |
| 11 | P-15 | 5 | 60 | 40 | 50 | 16.3 | A | 247 | 420 | 117 |
| 12 | P-26 | 5 | 60 | 40 | 50 | 16.3 | A | 258 | 416 | 128 |
| 13 | P-28 | 5 | 60 | 40 | 50 | 16.3 | A | 221 | 461 | 120 |
| 14 | - | - | 60 | 40 | 50 | 16.3 | C | 187 | 500 | 100 |

| | | | | | | | | | | |
|---|---|---|---|---|---|---|---|---|---|---|
| In Table 3: Amt: Amount that was used (in parts) *3: Dispersed condition of silica TSAB: Tensile strength at break (N/mm²) EAB: Elongation at break (%) ARI: Abrasion resistance index | | | | | | | | | | |

**Table 4**

| Kind | Amount that was used (part) |
|---|---|
| Mineral oil | 5 |
| Antioxidant | 1 |
| Stearic acid | 2 |
| Flowers of zinc | 3 |
| Wax | 2 |
| Curing accelerator | 1.5 |
| Sulfur | 1.8 |

| | |
|---|---|
| In Tables 3 and 4: Silica: Nipsil AQ (tradename) produced by TOSOH SILICA CORPORATION Mineral oil: Aromatic oil (JOMO X140 (tradename) produced by Japan Energy Company) Antioxidant: N-phenyl-N'-(1,3-dimethylbutyl)-p-phenylenediamine (NOCRAC 6C (tradename) produced by OUCHI SHINKO CHEMICAL INDUSTRIAL CO., LTD.) Stearic acid: Industrial stearic acid (tradename) produced by Kao Corporation Flowers of zinc: Flowers of Zinc 1 (tradename) produced by Mitsui Mining and Smelting Co., Ltd. Wax: Paraffin wax (OZOACE 0355 (tradename) produced by NIPPON SEIRO CO., LTD.) Curing accelerator: N-tert-butyl-2-benzothiazole sulfenamide (NOCCELER NS-P (tradename) produced by OUCHI SHINKO CHEMICAL INDUSTRIAL CO., LTD.) | |

As can be clearly understood, silica can be uniformly dispersed in rubber in each of the Examples wherein a dispersing agent for inorganic fillers according to this invention is used and, as a result, their mechanical strength and abrasion resistance index are significantly improved.

### Part 4 Preparation and Testing of Rubber Compositions

Rubber compositions were obtained by mixing and kneading together the materials shown in Table 5 at the described ratios by means of a Banbury mixer. Dynamic viscoelasticity tests were carried out on each of these rubber compositions to obtain the values of tan δ and viscosity (both as an index). The results are shown together in Table 5, in which Example 15 is a blank without using any dispersing agent.

For each of these rubber compositions, a spectrometer (a dynamic viscoelasticity testing machine) produced by Ueshima Seisakusho Co., Ltd. was used to measure the numerical values of tan δ and viscosity at frequency 52Hz, initial strain 10%, measurement temperature 60°C and dynamic strain 1% and displayed them as an index with the values of the rubber composition of Example 15 set equal to 100. The smaller the index value of tan δ, the lower is the pyrogenicity.

**Table 5**

| | | Example | | | | | | | |
|---|---|---|---|---|---|---|---|---|---|
| Kind | | 15 | 16 | 17 | 18 | 19 | 20 | 21 | 22 |
| SBR polymer solution | | 100.00 | 100.00 | 100.00 | 100.00 | 100.00 | 100.00 | 100.00 | 100.00 |
| Carbon | | 10.00 | 10.00 | 10.00 | 10.00 | 10.00 | 10.00 | 10.00 | 10.00 |
| Silica | | 50.00 | 50.00 | 50.00 | 50.00 | 50.00 | 50.00 | 50.00 | 50.00 |
| Silane compound | | 5.00 | 5.00 | 5.00 | 5.00 | 5.00 | 5.00 | 5.00 | 5.00 |
| Dispersing agent | P-1 | | 5.00 | 10.00 | | | | | |
| | P-8 | | | | 5.00 | | | | |
| | P-21 | | | | | 5.00 | | | |
| | P-15 | | | | | | 5.00 | | |
| | P-26 | | | | | | | 5.00 | |
| | P-28 | | | | | | | | 5.00 |
| Aromatic oil | | 30.00 | 30.00 | 30.00 | 30.00 | 30.00 | 30.00 | 30.00 | 30.00 |
| Stearic acid | | 2.00 | 2.00 | 2.00 | 2.00 | 2.00 | 2.00 | 2.00 | 2.00 |
| Antioxidant 1 | | 1.00 | 1.00 | 1.00 | 1.00 | 1.00 | 1.00 | 1.00 | 1.00 |
| Antioxidant 2 | | 1.00 | 1.00 | 1.00 | 1.00 | 1.00 | 1.00 | 1.00 | 1.00 |
| Flowers of zinc | | 2.50 | 2.50 | 2.50 | 2.50 | 2.50 | 2.50 | 2.50 | 2.50 |
| Curing accelerator 1 | | 0.60 | 0.60 | 0.60 | 0.60 | 0.60 | 0.60 | 0.60 | 0.60 |
| Curing accelerator 2 | | 1.00 | 1.00 | 1.00 | 1.00 | 1.00 | 1.00 | 1.00 | 1.00 |
| Curing accelerator 3 | | 0.60 | 0.60 | 0.60 | 0.60 | 0.60 | 0.60 | 0.60 | 0.60 |
| Sulfur | | 1.50 | 1.50 | 1.50 | 1.50 | 1.50 | 1.50 | 1.50 | 1.50 |
| Tan δ (index) | | 100 | 89 | 85 | 90 | 89 | 88 | 89 | 90 |
| Viscosity (index) | | 100 | 78 | 70 | 77 | 80 | 81 | 80 | 79 |

| | | | | | | | | | |
|---|---|---|---|---|---|---|---|---|---|
| In Table 5: Numerical values: All in units of mass parts except for tan δ and viscosity SBR polymer solution: T2000 (tradename) produced by Asahi Kasei Corporation Carbon: No. 80 Carbon (tradename) produced by Asahi Carbon Corporation Silica: Nipsil AQ (tradename) produced by Nippon Silica Kogyo Corporation with BET surface area = 220m²/g Silane compound: bis(3-triethoxysilylpropyl) disulfide Antioxidant 1: NOCRAC 6C (tradename) produced by OUCHI SHINKO CHEMICAL INDUSTRIAL CO., LTD. Antioxidant 2: NOCRAC 224 (tradename) produced by OUCHI SHINKO CHEMICAL INDUSTRIAL CO., LTD. Curing accelerator 1: SANCELER D (tradename) produced by SANSHIN CHEMICAL INDUSTRY CO., LTD. Curing accelerator 2: SANCELER DM (tradename) produced by SANSHIN CHEMICAL INDUSTRY CO., LTD. Curing accelerator 3: SANCELER NS (tradename) produced by SANSHIN CHEMICAL INDUSTRY CO., LTD. | | | | | | | | | |

As can be clearly understood, rubber compositions using a dispersing agent for inorganic fillers can accomplish both low pyrogenicity and reduced viscosity.

## Claims

1. A dispersing agent for inorganic fillers for dispersing the inorganic fillers uniformly inside a substrate, said dispersing agent comprising a modified conjugated diene polymer having one or more selected from the group consisting of Structural Unit A, Structural Unit B and Structural Unit C introduced into a conjugated diene polymer, wherein Structural Unit A is shown by Formula 1 which is 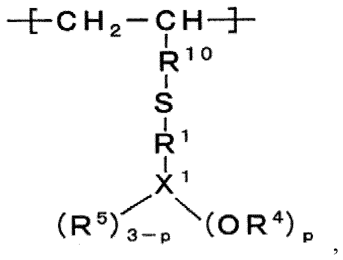 Structural Unit B is shown by Formula 2 which is 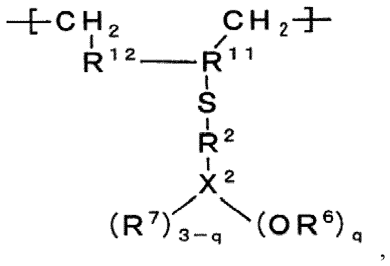 Structural Unit C is shown by Formula 3 which is 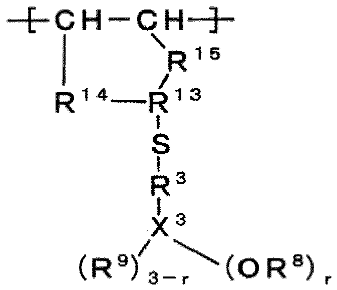 wherein R¹ - R¹⁰, R¹⁴ and R¹⁵ are each a hydrocarbon group with 1 - 20 carbon atoms, R¹¹ - R¹³ are each a hydrocarbon group with 1-10 carbon atoms, X¹ - X³ are each Si, Sn or Ge, and p, q and r are each an integer 1 - 3.

2. The dispersing agent for inorganic fillers of claim 1, wherein said modified conjugated diene polymer has said Structural Unit A and said Structural Unit B introduced into a conjugated diene polymer.

3. The dispersing agent for inorganic fillers of claim 1 or 2, wherein R¹ - R³ are each a hydrocarbon group with 1-11 carbon atoms.

4. The dispersing agent for inorganic fillers of any of claims 1 to 3, wherein R⁴ - R⁹ are each a hydrocarbon group with 1-4 carbon atoms.

5. The dispersing agent for inorganic fillers of any of claims 1 to 4, wherein X¹ - X³ are each Si.

6. The dispersing agent for inorganic fillers of any of claims 1 to 5, wherein said conjugated diene polymer is obtained by polymerizing or copolymerizing one or more of monomers selected from the group consisting of 1,3-butadiene, isoprene, 1,3-pentadiene, 1,4-pentadiene, cyclopentadiene, 2,3-dimethyl-1,3-butadiene, 1,4-hexadiene, 1,5-hexadiene, 1,3-cyclohexadiene, 1,4-cyclohexadiene, 1,3-heptadiene, 1,6-heptadiene, 2-methyl-1,3-heptadiene, 3-methyl-1,4-heptadiene, 1,3,5-heptatriene, 5-methyl-1,3,6-heptatriene, cycloheptatriene, 1,7-octadiene, 1,3-octadiene, 3,7-dimethyl-1,6-octadiene, 7,7-dimethyl-2,5-octadiene, 1,2-cyclooctadiene, 1,5-cyclooctadiene, and 1,3,5-cyclooctatriene.

7. The dispersing agent for inorganic fillers of any of claims 1 to 5, wherein said conjugated diene polymer is obtained by polymerizing or copolymerizing one or more of monomers selected from the group consisting of 1,3-butadiene, isoprene, and 2,3-dimethyl-1,3-butadiene.

8. The dispersing agent for inorganic fillers of any of claims 1 to 7, wherein said conjugated diene polymer has within its molecule 80 molar % or more of structural units with 1,2 chemical bonds.

9. The dispersing agent for inorganic fillers of any of claims 1 to 8, wherein said conjugated diene polymer has numerical average molecular weight of 200 - 100000.

10. The dispersing agent for inorganic fillers of any of claims 1 to 8, wherein said conjugated diene polymer has numerical average molecular weight of 500 - 10000.

11. The dispersing agent for inorganic fillers of any of claims 1 to 10, wherein said modified conjugated diene polymer has numerical average molecular weight of 300 - 200000.

12. The dispersing agent for inorganic fillers of any of claims 1 to 10, wherein said modified conjugated diene polymer has numerical average molecular weight of 700 - 20000.

13. The dispersing agent for inorganic fillers of any of claims 1 to 12, wherein said substrate is made of a rubber material.

14. The dispersing agent for inorganic fillers of claim 13, wherein said rubber material is one or more selected from the group consisting of natural rubber, synthetic isoprene rubber, butadiene rubber, styrene-butadiene rubber, ethylene-α-olefin-diene copolymer rubber, acrylonitrile-butadiene rubber, acrylonitrile-styrene-butadiene rubber, chloroprene rubber, halogenated butyl rubber, and copolymers of styrene compound having halogenated methyl group within its molecule and isoprene.

15. The dispersing agent for inorganic fillers of claims 13 to 14 which is used at a rate of 1 - 40 mass parts for 100 mass parts of said rubber material.

16. The dispersing agent for inorganic fillers of any of claims 1 to 15, wherein said inorganic fillers are one or more selected from the group consisting of silica, carbon black, calcium carbonate, magnesium carbonate, and alumina.

17. The dispersing agent for inorganic fillers of any of claims 1 to 15, wherein said inorganic fillers are selected from the group consisting of silica and carbon black.

18. A method of producing the dispersion agent of any of claims 1 to 17, said method comprising the step of causing a compound to react with said conjugated diene polymer, wherein said compound has within its molecule a mercapto group and is shown by 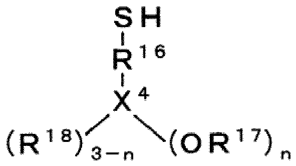 wherein R¹⁶ - R¹⁸ are each a hydrocarbon group with 1 - 20 carbon atoms, X₄ is Si, Sn or Ge, and n is an integer 1 - 3.

19. The method of claim 18, wherein said conjugated diene polymer and said compound are caused to react at a mass ratio of 99/1 - 10/90.

20. The method of claim 18, wherein said conjugated diene polymer and said compound are caused to react at a mass ratio of 95/5 - 15/85.

21. The method of any of claims 18 to 20, wherein X⁴ is Si.

22. The method of any of claims 18 to 21, wherein R¹⁶ is a hydrocarbon group with 1 - 11 carbon atoms.

23. The method of any of claims 18 to 22, wherein R¹⁷ and R¹⁸ are each a hydrocarbon group with 1 - 4 carbon atoms.

24. The method of any of claims 18 to 23, wherein said conjugated diene polymer and said compound are caused to react with heat in an atmosphere of an inactive gas in the absence of catalysts.

25. The method of claim 24, wherein said conjugated diene polymer and said compound are caused to react under a pressured condition.

26. The method of any of claims 18 to 25, wherein said conjugated diene polymer and said compound are caused to react at a reaction rate of 85% or more.

27. The method of any of claims 18 to 25, wherein said conjugated diene polymer and said compound are caused to react at a reaction rate of 90% or more.
